# EUROPEAN PATENT APPLICATION

(11) **EP 1 995 790 A2**
(43) Date of publication of application: **26.11.2008**
(21) Application number: 08251028.0
(22) Date of filing: 20.03.2008
(51) Int. Cl.: H01L 31/042, F24J 2/54

(54) **Frame structure for solar panels allowing sun following**

(30) Priority: 29.03.2007 ES 200700836
(71) Applicant: Rodriguez Hoyo, Jose Antonio, 48920 Portugalete (ES)
(72) Inventor: Rodriguez Hoyo, Jose Antonio, 48920 Portugalete (ES)
(74) Representative: Howick, Nicholas Keith

(57) **Abstract**

Sun follower which has a demountable compact constitution in which there is a column (1) of fixed height with an operation and control unit (7) and two extendable telescopic arms (2) articulated with the side of the said column, with a retracted position where they do not protrude beyond the top end of the column (1) and there is also a universal joint (3), a plate-holding frame (4) and a panel (5) of photovoltaic plates (6), the said universal joint (3) being fitted between the top end of the column (1) and the centre of the plate-holding frame (4), the frame (4) having associated means for fastening the panel (5) of photovoltaic plates (6), comprising a central cross (4a) where its crosspieces are articulated with the top ends of the telescopic arms (2), on two opposite sides, this central cross (4a) being closed by means of two bent sides (4b) and the said panel (5) comprising a plurality of photovoltaic plates (6).

## Description

### FIELD OF THE INVENTION

This invention relates to a Sun follower, this being understood to be the equipment which holds a panel of photovoltaic plates and incorporates means for orientating it according to the Sun's position at all times, with the purpose of taking the maximum advantage of the conversion of the light energy received to electrical energy.

### PRIOR ART

In this field, Sun followers are known which use various systems for orientating the panel of plates according to two co-ordinate axes, one horizontal, with which turning up / down is possible and the other vertical, with which turning left / right is possible. In the face of the ellipse described by the Sun for a terrestrial observer, these two sole degrees of freedom limit the orientating capacity of the panel of plates to succeed in causing the radiation received to strike the said panel according to the perpendicular.

In addition but no less important, the devices which are known with regard to this matter have complex constitutions formed by many separate elements which make their storage and transport difficult and which have to be erected *in situ* by qualified, skilled personnel, requiring a lengthy fitting up time and these difficulties also having repercussions on maintenance and repair work which might be necessary.

### EXPLANATION OF THE INVENTION AND ADVANTAGES

In view of this state of affairs, this invention proposes a Sun follower which has a demountable compact constitution in which, on one hand, there is a column of fixed height which incorporates an operation and control unit and two extendable telescopic arms which are articulated with the side of the said column and which have a retracted position in which they do not protrude beyond the top end of the column and, on the other hand, there is a universal joint, a plate-holding frame and a panel of photovoltaic plates, the said universal joint being fitted between the top end of the column and the centre of the plate-holding frame, the said plate-holding frame having associated means for fastening the panel of photovoltaic plates, and comprising a central cross in which its crosspieces are articulated with the top ends of the telescopic arms and in which, on two opposite sides, this central cross is closed by means of two bent sides and the said panel of photovoltaic plates comprising a plurality of photovoltaic plates which are organized so that the panel has an outline of rounded corners which can be inscribed in an ellipse and which forms two opposite sides, in which the photovoltaic plates are arranged at regular intervals descending from the centre to the ends of these sides.

A first outstanding advantage of the invention is inherent, precisely, in the compact design due to which the column of fixed height, the extendable telescopic arms and the operation and control unit are packed and transported together so that, without the need for erection operations and therefore for personnel skilled for the purpose, the column is established in the foundation provided and with this will subsequently be coupled to the rest of the elements, i.e. the plate-holding frame and, on this, the panel of photovoltaic plates. As a result, this constitution has fewer mechanical elements and, therefore, requires less maintenance and the technical assistance necessary is at longer intervals; the compactness offers greater strength; it is simpler in itself and also in its fitting up and maintenance which, as has been said, requires less time and does not require specialized personnel.

Another feature of the invention lies in its mobility; in the known solutions briefly described, any position of the panel plane is, of necessity, to be obtained by a succession of a horizontal movement and a vertical movement, positions of panel plane inclination which are not on these horizontal and vertical courses not being possible. Now, conversely, the panel plane can make turns of a pivoting type and positions of inclination thereof can be achieved which cannot be reached with the known solutions indicated, which circumstance makes faster and more precise Sun following possible. To assist the fitting of the panel to the plate-holding frame, according to the invention, the bent sides have a central section which is situated at its vertex and which has its ends articulated with the sections on either side of it; once fitting up has been carried out, this solution ensures suitable rigidity of the assembly. With regard to this matter, for the formation of the panel, the photovoltaic plates are fitted between rails which are fastened to the plate-holding frame by clamping bolts which form the said means of fastening the panel, which are associated with this plate-holding frame.

Another feature of the follower advocated is that the telescopic arms are, at their lower end, articulated with the column by means of a horizontal pin which is anchored to the column and, at their top end, these telescopic arms have a fork which, between its legs, is fitted with a transverse pin which belongs to a flange provided with means for its securing to the central cross crosspieces; with this solution, for transporting the compact assembly associated with the column, the telescopic arms can be laid against the column in their retracted position. Furthermore, also according to the invention, the universal joint is a horizontal cross which can turn with respect to a first support anchored on the column at the same time as, with respect to it, a second support which is anchored to the centre of the plate-holding frame can turn. With all this, to operate, the telescopic arms are secured to the crosspieces of the plate-holding frame cross and, using the variable degree of extension of each one and the orientating capacity of the universal joint, the position of the plate-holding panel desired at all times is sought. This seeking is entrusted to the operation and control unit which, with hydraulic, fluid or electrical technology, will be assisted by a computer with its corresponding software programme. With its shape including rounded corners, the panel can have mobility in all directions, albeit with the end of its major centre-line being very close to the ground.

### DRAWINGS AND REFERENCES

In order for the nature of the invention to be understood better, an industrial embodiment by way of merely illustrative and non-limiting example is shown in the attached drawings.
Figure 1 is a perspective view which shows a Sun follower according to the invention.
Figure 2 is a perspective view which shows the compact sub-assembly formed by the column (1), the extendable telescopic arms (2) and the operation and control unit (7).
Figure 3 is an enlargement of detail III ringed in figure 1.
Figure 4 is an enlargement of detail IV ringed in figure 1.
Figure 5 is an enlargement of a joint such as the one in detail V ringed in figure 1 but viewed from above, not from below.
Figure 6 shows a schematic view in right-angle projection of a joint such as the one in figure 5.

In these illustrations, the following references are indicated:
1.- Column
2.- Extendable telescopic arms
3. Universal joint
3a.- Universal joint (3) horizontal cross
3b.- First support of universal joint (3)
3c.- Second support of universal joint (3)
4.- Plate-holding frame
4a.- Plate-holding frame (4) central cross
4b.- Plate-holding frame (4) bent sides
4c.- Plate-holding frame (4) central section
5.- Panel of photovoltaic plates (6)
6.- Photovoltaic plates
7.- Operation and control unit
8.- Panel (5) rails
9.- Clamping bolts
10.- Horizontal pin
11.- Fork
12.- Flange (13) transverse pin
13.- Flange
14.- Cables

### EXPLANATION OF A PREFERRED EMBODIMENT

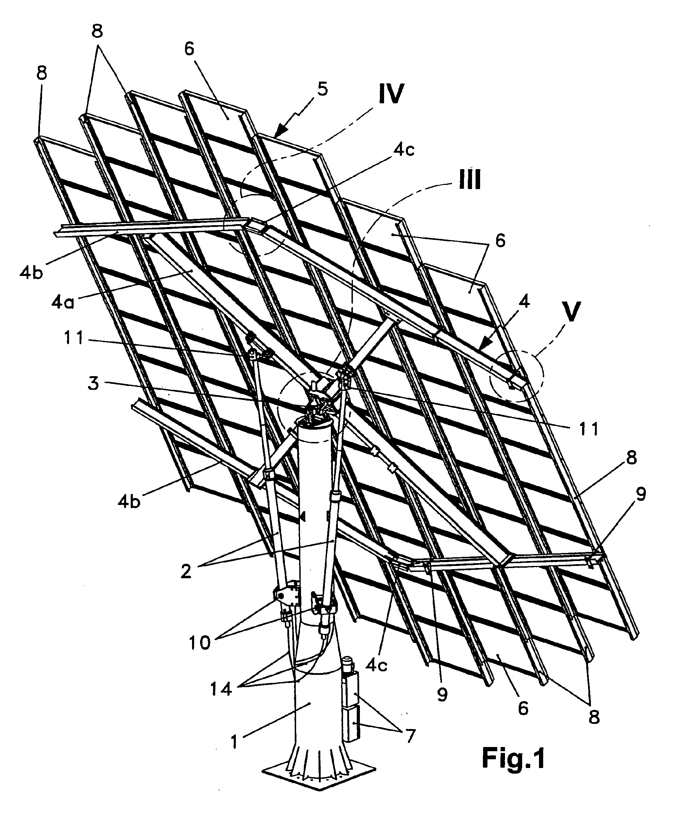

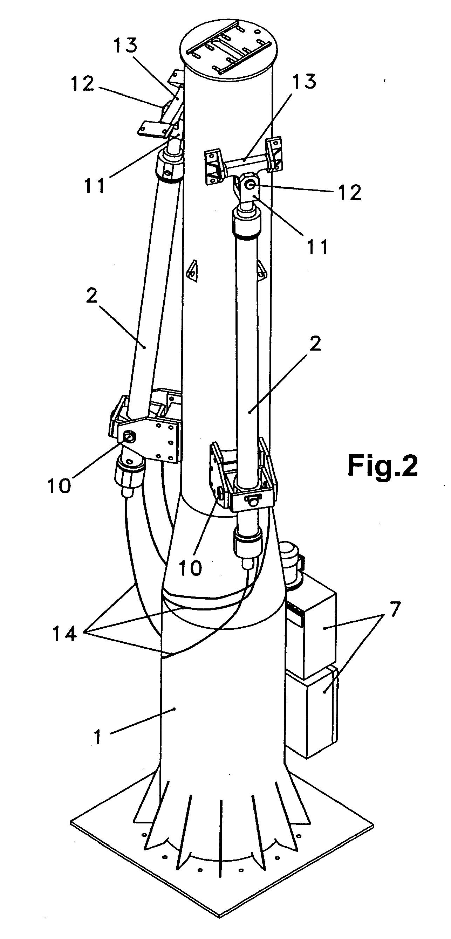

With regard to the drawings and references listed above, there is illustrated in the attached drawings a preferred embodiment of the object of the invention, which relates to a Sun follower which, as figure 1 illustrates, has a demountable compact constitution in which, on one hand, there is a column (1) of fixed height which incorporates an operation and control unit (7) and two extendable telescopic arms (2) which are articulated with the side of the said column and which have a retracted position in which they do not protrude beyond the top end of the column (1) and, on the other hand, there is a universal joint (3), a plate-holding frame (4) and a panel (5) of photovoltaic plates (6), the said universal joint (3) being fitted between the top end of the column (1) and the centre of the plate-holding frame (4), the said plate-holding frame (4) having associated means for fastening the panel (5) of photovoltaic plates (6) and comprising a central cross (4a) in which its crosspieces are articulated with the top ends of the telescopic arms (2) and in which, on two opposite sides, this central cross (4a) is closed by means of two bent sides (4b) and the said panel (5) of photovoltaic plates (6) comprising a plurality of photovoltaic plates (6) which are organized so that the panel (5) has an outline of rounded corners which can be inscribed in an ellipse and which forms two opposite sides, in which the photovoltaic plates (6) are arranged at regular intervals descending from the centre to the ends of these sides. Easily appreciable in this constitution are the above-mentioned advantageous properties, derived from the compactness which is offered by the assembly formed by the column (1), the telescopic arms (2) and the operation and control unit (7), which is illustrated more clearly in figure 2, where the telescopic arms (2) are retracted and laid against the column (1); all of this compact assembly is transported together and is anchored on the foundation base provided at the place of installation, the moveable part subsequently being established on it.

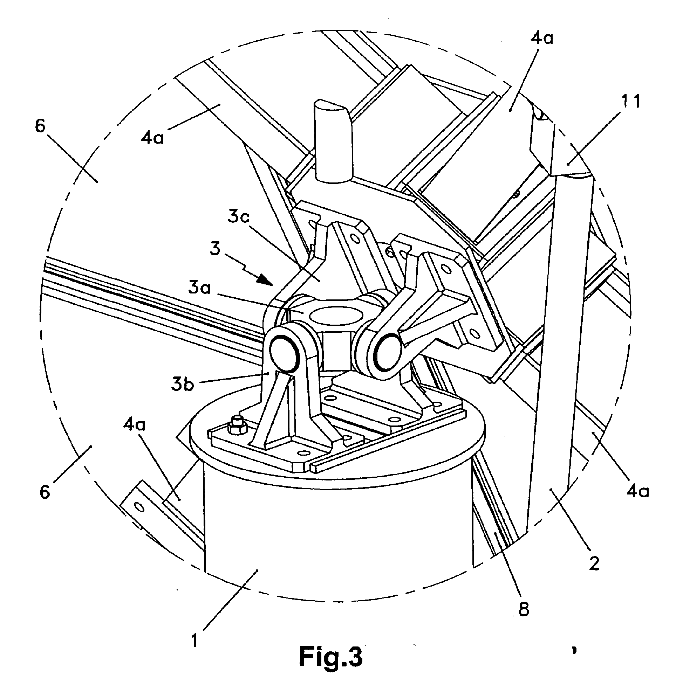

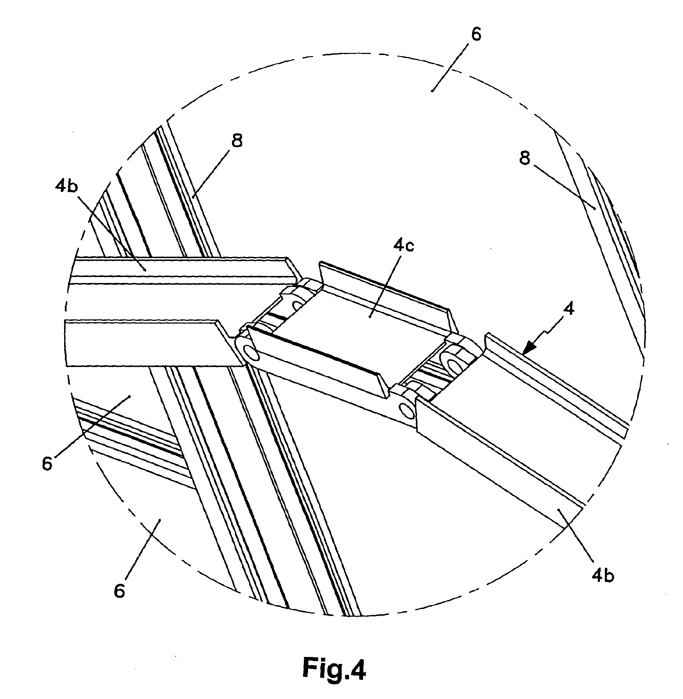

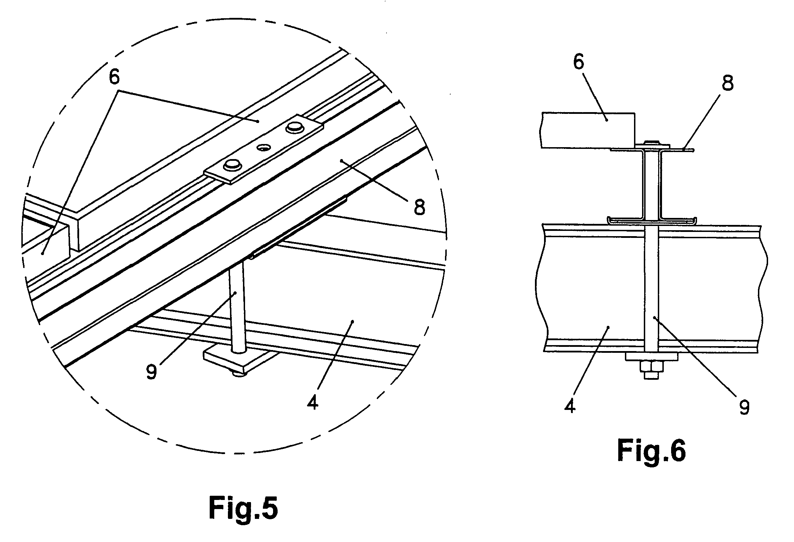

For this purpose, the invention provides the following: that the universal joint (3) is (figure 3) a horizontal cross (3a) which can turn with respect to a first support (3b) anchored on the column (1) at the same time as, with respect to it, a second support (3c) which is anchored to the centre of the plate-holding frame (4) can turn, that the telescopic arms (2) are, (figure 1) at their bottom end, articulated with the column (1) by means of a horizontal pin (10) which is anchored to the said column and, at their top end, these telescopic arms (2) have a fork (11) which, between its legs, is fitted with a transverse pin (12) which belongs to a flange (13) provided with means for its securing to the crosspieces of the central cross (4a), that the bent sides (4b) have (figure 4) a central section (4c) which is situated at their vertex and which has its ends articulated with the sections on either side thereof and that for the formation of the panel (5) the photovoltaic plates (6) are (figures 1, 5 and 6) fitted between rails (8) which are fastened to the plate-holding frame (4) by clamping bolts (9) which form the said means of fastening the panel (5) which are associated with this plate-holding frame (4).

Then, by means of the first support (3b) and the second support (3c), the universal joint (3) is secured to the column (1) and to the plate-holding frame (4) and the combined turns made possible by the cross (3a) give this plate-holding frame (4) great mobility. Finally, it is sufficient to proceed with securing the panel (5) of photovoltaic plates (6) by means of the clamping bolts (9) applied between the bent sides (4b) of the plate-holding frame (4) and the rails (8) of the panel (5), the fitting up of the Sun follower according to the invention being thus concluded. Emphasis is to be given to the rounded corner configuration of the panel, in harmony with its great capacity for movement in all directions which, in contrast with the known solutions referred to, does not incorporate a straight side which moves parallel with the ground.

## Claims

1. Sun follower, **characterized in that** it has a demountable compact constitution in which, on one hand, there is a column (1) of fixed height which incorporates an operation and control unit (7) and two extendable telescopic arms (2) which are articulated with the side of the said column and which have a retracted position in which they do not protrude beyond the top end of the column (1) and, on the other hand, there is a universal joint (3), a plate-holding frame (4) and a panel (5) of photovoltaic plates (6), the said universal joint (3) being fitted between the top end of the column (1) and the centre of the plate-holding frame (4), the said plate-holding frame (4) having associated means for fastening the panel (5) of photovoltaic plates (6) and comprising a central cross (4a) in which its crosspieces are articulated with the top ends of the telescopic arms (2) and in which, on two opposite sides, this central cross (4a) is closed by means of two bent sides (4b) and the said panel (5) of photovoltaic plates (6) comprising a plurality of photovoltaic plates (6) which are organized so that the panel (5) has an outline of rounded corners, which outline can be inscribed in an ellipse and which forms two opposite sides, in which the photovoltaic plates (6) are arranged at regular intervals descending from the centre to the ends of these sides.

2. Sun follower, according to Claim 1, **characterized in that** the bent sides (4b) have a central section (4c) which is situated at their vertex and which has its ends articulated with the sections on either side of it.

3. Sun follower, according to the preceding claims, **characterized in that,** for the formation of the panel (5), the photovoltaic plates (6) are fitted between rails (8) which are fastened to the plate-holding frame (4) by clamping bolts (9) which form the said means of fastening the panel (5), which are associated with this plate-holding frame (4).

4. Sun follower, according to the preceding claims, **characterized in that** the telescopic arms (2) are, at their bottom end, articulated with the column (1) by means of a horizontal pin (10) which is anchored to the said column and, at their top end, these telescopic arms (2) have a fork (11) which, between its legs, is fitted with a transverse pin (12) which belongs to a flange (13) provided with means for its securing to the crosspieces of the central cross (4a).

5. Sun follower, according to the preceding claims, **characterized in that** the universal joint (3) is a horizontal cross (3a) which can turn with respect to a first support (3b) anchored on the column (1), at the same time as a second support (3c) which is anchored to the centre of the plate-holding frame (4) can turn with respect to the said column.
